(19) Europäisches Patentamt
European Patent Office
Office européen des brevets

(11) **EP 2 823 201 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(21) Anmeldenummer: **13718154.1**

(22) Anmeldetag: **15.04.2013**

(51) Int Cl.:
***F16H 57/033*** *(2012.01)*

(86) Internationale Anmeldenummer:
**PCT/EP2013/057818**

(87) Internationale Veröffentlichungsnummer:
**WO 2013/156446 (24.10.2013 Gazette 2013/43)**

(54) **GETRIEBEMOTORENBAUREIHE**

GEAR MOTOR SERIES

GAMME DE MOTEURS D'ENGRENAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2012 EP 12164446**

(43) Veröffentlichungstag der Anmeldung:
**14.01.2015 Patentblatt 2015/03**

(73) Patentinhaber: **Siemens Aktiengesellschaft 80333 München (DE)**

(72) Erfinder: **KUNERT, Jens 72070 Tübingen (DE)**

(56) Entgegenhaltungen:
**EP-A- 0 452 739     EP-A2- 1 215 417**
**DE-A1- 10 312 941**

## Beschreibung

Die vorliegende Erfindung betrifft eine Getriebemotorenbaureihe mit zwei unterschiedliche Zähnezahlen aufweisenden Ritzeln und mehreren unterschiedliche Zähnezahlen aufweisenden Zahnrädern, wobei die Ritzel und die Zahnräder derart ausgebildet sind, dass jedes Ritzel in mehreren vorbestimmten Achsabständen mit einem der Zahnräder zur Bildung einer ersten Getriebestufe gepaart werden kann.

Getriebemotorenbaureihen der zuvor beschriebenen Art sind im Stand der Technik bereits bekannt. Sie bilden einen Bausatz aus Einzelkomponenten, aus denen unterschiedliche Getriebemotoren zusammengesetzt werden können, die sich hinsichtlich der Motorbaugröße, den im Getriebe realisierten Übersetzungen oder dergleichen voneinander unterscheiden. Eine sehr hohe Varianz der Übersetzungen eines Getriebes wird vor allem durch eine Vielzahl verschiedener Übersetzungen in der ersten motorseitigen Übersetzungsstufe erzielt. Zwischen- und Endstufen eines Getriebes weisen dagegen eine eher geringe Varianz auf. Die insgesamt benötigte Anzahl an Verzahnungsteilen wird somit vornehmlich durch die erste Stufe geprägt. Dabei sind die Getriebemotorenhersteller aus Kostengründen stets bestrebt, die Anzahl der Einzelkomponenten einer Getriebemotorenbaureihe möglichst gering zu halten.

Eine Reduzierung der Einzelkomponenten einer Getriebemotorenbaureihe wurde bislang in erster Linie dadurch erzielt, dass ein Ritzel auf möglichst vielen verschiedenen Achsabständen eingesetzt werden kann, wobei für jeden Achsabstand pro Ritzel ein gesondertes Zahnrad vorgesehen ist. So sind für einen ersten Achsabstand mit zwei Ritzeln und zwei Zahnrädern insgesamt zwei verschiedene Übersetzungen realisierbar. Für jeden weiteren Achsabstand können mit denselben Ritzeln und zwei zusätzlichen Zahnrädern nochmals zwei Übersetzungen erzielt werden. Auf diese Weise konnte die Varianz der Ritzel und somit die Anzahl der Einzelkomponenten einer Getriebemotorenbaureihe bereits deutlich eingeschränkt werden.

Weitere Getriebemotorenbaureihen sind in der gattungsgemäße Druckschrift EP 1 215 417 A2, und in den Druckschriften EP 0 452 739 A und DE 103 12 941 A1 offenbart.

Ausgehend von diesem Stand der Technik ist es eine Aufgabe der vorliegenden Erfindung, die Anzahl der Einzelkomponenten einer Getriebemotorenbaureihe der eingangs genannten Art weiter zu reduzieren, ohne dabei die Varianz der realisierbaren Übersetzungen einzuschränken.

Zur Lösung dieser Aufgabe schafft die vorliegende Erfindung eine Getriebemotorenbaureihe der eingangs genannten Art, die dadurch gekennzeichnet ist, dass pro vorbestimmtem Achsabstand ein einziges Zahnrad vorgesehen ist, das derart ausgebildet ist, dass es zur Bildung einer ersten Getriebestufe wahlweise mit dem einen Ritzel oder mit dem anderen Ritzel gepaart werden kann. Dank dieses Aufbaus der erfindungsgemäßen Getriebemotorenbaureihe sind bei einem ersten Achsabstand mit den beiden Ritzeln und einem einzigen Zahnrad zwei verschiedene Übersetzungen realisierbar. Für jeden weiteren Achsabstand können mit denselben Ritzeln und einem zusätzlichen Zahnrad nochmals zwei Übersetzungen erzielt werden. Auf diese Weise wird eine große Varianz bei einer sehr geringen Anzahl von Einzelkomponenten erzielt, was mit sehr geringen Kosten einhergeht.

Bevorzugt unterscheiden sich die Zähnezahlen der beiden Ritzel um einen Zahn voneinander, so dass gilt: $z1a = z1b + 1$.

Gemäß einer Ausgestaltung der vorliegenden Erfindung sind die Profilverschiebungsfaktoren der beiden Ritzel derart gewählt, dass die jeweilige Differenz zwischen den Drehspielwinkeln, die sich jeweils beim Kämmen zwischen dem pro vorbestimmtem Achsabstand vorgesehenen einzigen Zahnrad und den beiden Ritzeln einstellen, bei mehreren vorbestimmten Achsabständen vorab definierten Akzeptanzkriterien genügt, wobei die Differenz vorteilhaft minimal ist. Entsprechend werden die miteinander kämmenden Komponenten optimal aufeinander eingestellt. vorab definierten Akzeptanzkriterien genügt, wobei die Differenz vorteilhaft minimal ist. Entsprechend werden die miteinander kämmenden Komponenten optimal aufeinander eingestellt.

Gemäß einer Ausgestaltung der vorliegenden Erfindung zählt/zählen zu den Akzeptanzkriterien eine Drehspielabweichung zum Standardwert nahe Null und/oder ein Einhalten eines gewünschten Übersetzungsverhältnisses und/oder ein Erreichen geforderter Festigkeitswerte.

Weitere Vorteile und Merkmale der vorliegenden Erfindung werden anhand der nachfolgenden Beschreibung einer Ausführungsform einer erfindungsgemäßen Getriebemotorenbaureihe unter Bezugnahme auf die beiliegende Zeichnung deutlich. Darin ist

Figur 1    eine tabellarische Ansicht von Einzelparametern einer mit zwei Ritzeln und verschiedenen Zahnrädern realisierbaren ersten Getriebestufe einer bekannten Getriebemotorenbaureihe und

Figur 2    eine tabellarische Ansicht von Einzelparametern einer mit zwei Ritzeln und verschiedenen Zahnrädern realisierbaren ersten Getriebestufe einer Getriebemotorenbaureihe gemäß einer Ausführungsform der vorliegenden Erfindung.

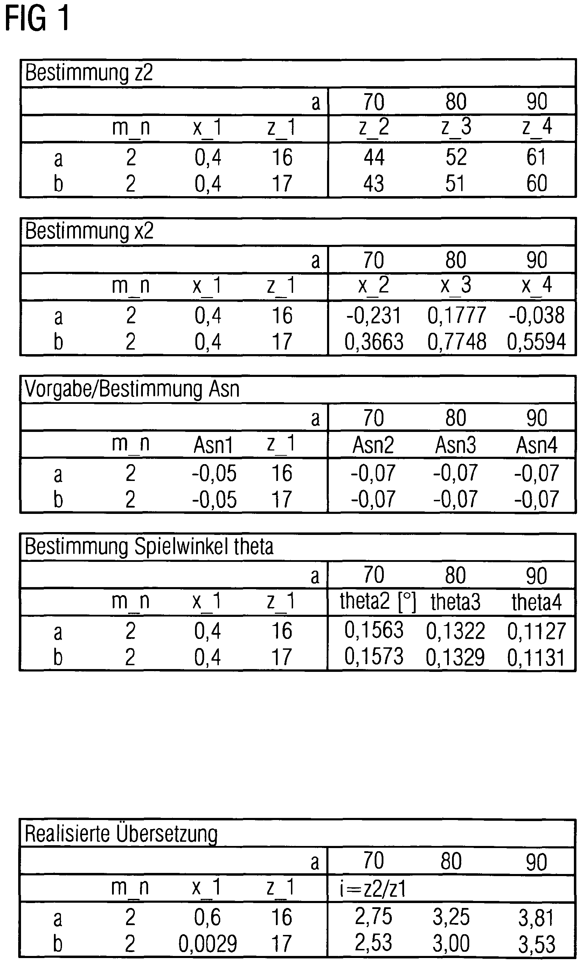

Nachfolgend wird beispielhaft erläutert, wie die in Figur 1 aufgeführten Parameter der bekannten Getriebemotorenbaureihe geändert werden können, um eine erfindungsgemäße Getriebemotorenbaureihe zu erzielen.

Gemäß Figur 1 umfasst eine bekannte Getriebemotorenbaureihe eine erste Getriebestufe, die zwei Ritzel mit den Zähnezahlen z1a und z1b umfasst, wobei z1a = 16 und z1b = 17 ist. Beide Ritzel z1a und z1b weisen denselben Normalmodul mn auf, wobei gilt: mn = 2 mm.

Für den Achsabstand a = 70 mm ist für das Ritzel mit der Zähnezahl z1a ein Zahnrad mit der Zähnezahl z2a = 44 vorgesehen. Dem Ritzel mit der Zähnezahl z1b ist bei gleichem Achsabstand a = 70 mm ein weiteres Zahnrad mit der Zähnezahl z2b = 43 zugeordnet. Durch Paarung des Ritzels mit der Zähnezahl z1a mit dem Zahnrad mit der Zähnezahl z2a und durch Paarung des Ritzels mit der Zähnezahl z1b mit dem Zahnrad mit der Zähnezahl z2b können entsprechend zwei verschiedene Übersetzungen bei diesem Achsabstand realisiert werden. Für den Achsabstand 80 mm sind zwei weitere Zahnräder mit den Zähnezahlen z3a = 52 und z3b = 51 vorhanden, und für den Achsabstand a = 90 mm sind Zahnräder mit den Zähnezahlen z4a = 61 und z4b = 60 vorgesehen. Insgesamt ergeben sich somit sechs verschiedene mögliche Übersetzungen i für die erste Getriebestufe.

Mit

$$x2 = (z1 + z2) * (inv(\alpha wt) - inv(\alpha t)) / (2 * tan(\alpha n)) - x1$$

und

$$\alpha wt = arccos(mn * (z1 + z2) * cos(\alpha t) / cos(ß) / 2 / a)$$

sowie

$$\alpha t = arctan(tan(\alpha n) / cos(ß))$$

ergeben sich bei vorgegebenen Werten für x1, αn, ß, mn, z1 und z2 die in der Tabelle aufgeführten Profilverschiebungsfaktoren x2a, x2b, x3a, x3b, x4a und x4b, wobei αwt der Betriebseingriffswinkel, αt der Stirneingriffswinkel, αn der Normaleingriffswinkel, ß der Schrägungswinkel, mn der Normalmodul und a der Achsabstand ist.

Die Zahndickenabmaße Asn folgen vereinbarten Festlegungen für ein gewünschtes Drehflankenspiel und können beispielsweise entsprechenden Normen wie der DIN 3967 entnommen werden.

Mit

$$\upsilon2 = 2 * jt / dw2$$

und

$$jt = -(Asn1 + Asn2) / cos(ß)$$

sowie

$$dw2 = 2 * a * z2 / (z1 + z2)$$

wird der Drehspielwinkel u2 ermittelt, wobei der Übersichtlichkeit halber auf die Darstellung zusätzlicher aber hier nicht relevanter Einflussgrößen auf das Drehspiel wie z. B. die Achsabstandstoleranz verzichtet wurde. Es stellen jt das theoretische Flankenspiel, Asn die gewählten Zahndickenabmaße und dw2 den Wälzkreisdurchmesser des Rades dar. Somit gilt der hier dargestellte Drehspielwinkel bei Messung am Rad.

Durch Vorgabe der Werte für x1, αn, ß, mn, z1 und z2 und geeignete Wahl der Zahndickenabmaße Asn ergeben sich die in der Tabelle angegebenen weiteren Daten der beiden Ritzel und der sechs Zahnräder ebenso wie die Werte für die Drehspielwinkel u2 der sechs Übersetzungen i.

Mit einer solchen Getriebemotorenbaureihe lassen sich mit insgesamt acht Einzelkomponenten sechs verschiedene Übersetzungen realisieren, wie es aus dem letzten Block der Tabelle hervorgeht.

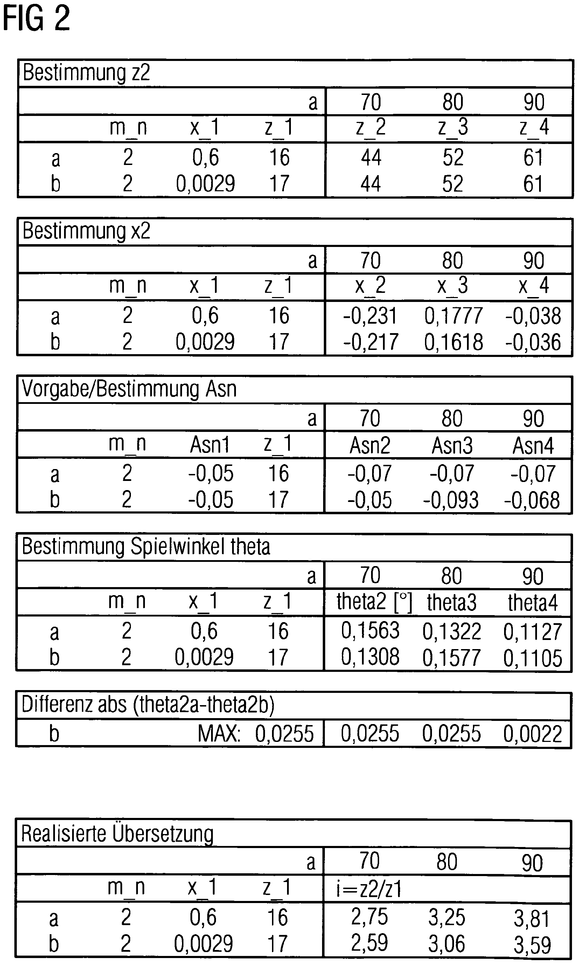

Figur 2 zeigt analog zu Figur 1 eine tabellarische Ansicht der zuvor beschriebenen Parameter, wobei die Parameter jedoch derart modifiziert sind, dass sich eine erste Getriebestufe einer Getriebemotorenbaureihe gemäß einer Ausführungsform der vorliegenden Erfindung ergibt.

Ausgangspunkt sind auch hier zwei Ritzel mit den Zähnezahlen $z1a = 16$ und $z1b = 17$, die denselben Normalmodul $mn = 2$ aufweisen. Im Gegensatz zu der in Figur 1 dargestellten Tabelle sind jedoch die Profilverschiebungsfaktoren $x1a$ und $x1b$ derart angepasst, dass über mehrere Räder und Achsabstände hinweg gleichzeitig nur eine geringe Abweichung zum früher dargestellten Zahnflankenspiel gegeben ist. Dafür wird für $z1a < z1b$, wie es vorliegend der Fall ist, $x1a$ hinreichend groß und $x1b$ hinreichend klein gewählt. Im vorliegenden Beispiel ist $x1a = 0,6$ und $x1b = 0,0029$. Für die Achsabstände $a = 70$ mm, $a = 80$ mm und $a = 90$ mm ist jeweils nur ein einzelnes Zahnrad mit der Zähnezahl $z2$ vorgesehen, das mit beiden Ritzeln zur Erzielung unterschiedlicher Übersetzungen $i$ kämmen kann, wobei vorliegend gilt: $z2a = z2b = 44$; $z3a = z3b = 52$ und $z4a = z4b = 61$.

Mit den Profilverschiebungsfaktoren $x1$ der beiden Ritzel und den Zähnezahlen $z2$, $z3$, $z4$ der drei Zahnräder ergeben sich rechnerisch die in der Tabelle aufgeführten Profilverschiebungsfaktoren $x2a$, $x2b$, $x3a$, $x3b$, $x4a$ und $x4b$. Die Auslegung ist so zu gestalten, dass die Profilverschiebungsfaktoren $x2a$ und $x2b$ annähernd gleich sind. Analoges gilt für die Profilverschiebungsfaktoren $x3a$ und $x3b$ sowie $x4a$ und $x4b$.

Durch die noch verbleibende Differenz zwischen $x2a$ und $x2b$, $x3a$ und $x3b$ sowie $x4a$ und $x4b$ entsteht ein verändertes Drehflankenspiel. Dieses lässt sich als Änderung des Zahndickenabmaßes am Rad $\Delta Asn2$, $\Delta Asn3$ bzw. $\Delta Asn4$ ausdrücken. Der Betrag der Änderung des Zahndickenabmaßes ist wie folgt zu errechnen:

$$\Delta Asn2 = \left| (x2a - x2b) * mn * 2 * \tan(\alpha n) \right|$$

Analoges gilt für $\Delta Asn3$ und $\Delta Asn4$.

Hat die Auslegung über alle betrachteten Achsabstände $a$ akzeptable Abweichungen des Drehflankenspiels ergeben, so können die beiden Zahnräder pro Achsabstand $a$ gemäß der Tabelle in Figur 1 jeweils durch ein einzelnes Zahnrad ersetzt werden, wie es der Tabelle in Figur 2 zu entnehmen ist. Somit kann pro Achsabstand $a$ ein einzelnes Zahnrad mit beiden Ritzeln gepaart werden, wodurch jeweils zwei Übersetzungen $i$ realisierbar sind, wie es im letzten Block der Tabelle in Figur 2 dargestellt ist. Akzeptanzkriterien sind neben den rein geometrischen Randbedingungen beispielsweise das Vermeiden eines Klemmens der Räder, wofür das Gesamtdrehspiel größer als Null sein muss, das Über- oder Unterschreiten eines gewünschten Drehspiels, das Erreichen eines gewünschten Übersetzungsbereiches, das Erreichen geforderter Festigkeitswerte oder dergleichen.

Wird dieses Vorgehen über möglichst viele verschiedene Ritzel $z1a$ und $z1b$ und Achsabstände $a$ der ersten Stufe einer Getriebemotorenbaureihe angewandt, ergibt sich ein entsprechend erhöhtes Einsparpotential. Wegen der hohen Anzahl der Randbedingungen empfiehlt sich jeweils ein numerisches Vorgehen zur Wahl optimaler Werte für $x1a$ und $x1b$, wobei vorliegend davon ausgegangen wird, dass die weiteren Geometriedaten bereits vorliegen. In der Tabelle gemäß Figur 2 ist beispielsweise als Randbedingung angegeben, dass die Differenz $|\upsilon 2a - \upsilon 2b| \leq 0,0255$ sein soll.

Bei der zuvor beschriebenen, bevorzugt iterativen Vorgehensweise wurden Werte für $x1$ gewählt und ausgehend von dieser Wahl Werte für $x2$ berechnet. Alternativ können in analoger Weise natürlich auch Werte für $x2$ gewählt und daraufhin Werte für $x1$ berechnet werden. In diesem Fall gilt dann

$$x1 = (z1 + z2) * (\mathrm{inv}(\alpha wt) - \mathrm{inv}(\alpha t)) / (2 * \tan(\alpha n)) - x2$$

Die Getriebemotorenbaureihe gemäß der vorliegenden Erfindung zeichnet sich insbesondere dadurch aus, dass in der ersten Getriebestufe mit wenigen Einzelkomponenten viele verschiedene Übersetzungen realisierbar sind, wodurch eine kostengünstige Getriebemotorenbaureihe bereitgestellt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Getriebemotorenbaureihe mit zwei unterschiedliche Zähnezahlen ($z1a$, $z1b$) aufweisenden Ritzeln und mehreren unterschiedliche Zähnezahlen ($z2a$, $z3a$, $z4a$) aufweisenden Zahnrädern, wobei die Ritzel und die Zahnräder derart ausgebildet sind, dass jedes Ritzel in mehreren vorbestimmten Achsabständen ($a$) mit einem der Zahnräder zur Bildung einer ersten Getriebestufe gepaart werden kann, **dadurch gekennzeichnet, dass** pro vorbestimmtem Achsabstand ($a$) ein einziges Zahnrad vorgesehen ist, das derart ausgebildet ist, dass es zur Bildung einer ersten Getriebestufe wahlweise mit dem einen Ritzel oder mit dem anderen Ritzel gepaart werden kann.

2. Getriebemotorenbaureihe nach Anspruch 1, **dadurch gekennzeichnet, dass** sich die Zähnezahlen (z1a, z1b) der beiden Ritzel um einen Zahn voneinander unterscheiden.

3. Getriebemotorenbaureihe nach einem der vorhergehenden Ansprüche, **dadurch gekennzeichnet, dass** die Profilverschiebungsfaktoren (x1a, x1b) der beiden Ritzel derart gewählt sind, dass die jeweilige Differenz zwischen den Drehspielwinkeln (u2a, u2b), die sich jeweils beim Kämmen zwischen dem pro vorbestimmtem Achsabstand (a) vorgesehenen Zahnrad und den beiden Ritzeln einstellen, bei mehreren vorbestimmten Achsabständen (a) definierten Akzeptanzkriterien genügt.

4. Getriebemotorenbaureihe nach Anspruch 3, **dadurch gekennzeichnet, dass** zu den Akzeptanzkriterien eine Drehspielabweichung zum Standardwert nahe Null zählt.

5. Getriebemotorenbaureihe nach einem der Ansprüche 3 oder 4, **dadurch gekennzeichnet, dass** zu den Akzeptanzkriterien ein Einhalten eines gewünschten Übersetzungsverhältnisses zählt.

6. Getriebemotorenbaureihe nach einem der Ansprüche 3 bis 5, **dadurch gekennzeichnet, dass** zu den Akzeptanzkriterien ein Erreichen geforderter Festigkeitswerte zählt.

7. Getriebemotorenbaureihe nach einem der Ansprüche 3 bis 6, **dadurch gekennzeichnet, dass** die Profilverschiebungsfaktoren (x1a, x1b) der beiden Ritzel derart gewählt sind, dass die jeweilige Differenz zwischen den Drehspielwinkeln (u2a, u2b), die sich jeweils beim Kämmen zwischen dem pro vorbestimmtem Achsabstand (a) vorgesehenen Zahnrad und den beiden Ritzeln einstellen, bei mehreren vorbestimmten Achsabständen (a) minimal ist.

**Claims**

1. Geared motor series having two pinions with different numbers of teeth (z1a, z1b), and a plurality of toothed wheels with different numbers of teeth (z2a, z3a, z4a), the pinions and the toothed wheels being designed such that each pinion, in a plurality of predetermined axial distances (a), can be paired with one of the toothed wheels in order to form a first gear stage, **characterised in that** one individual toothed wheel is provided for each predetermined axial distance (a), which is embodied such that it can be optionally paired with the one pinion or with the other pinion to form a first gear stage.

2. Geared motor series according to claim 1, **characterised in that** the number of teeth (z1a, z1b) on the two pinions differ from each other by one tooth.

3. Geared motor series according to one of the preceding claims, **characterised in that** the addendum modification coefficients (x1a, x1b) of the two pinions are chosen in such a way that the respective difference between the backlash angles ($\nu$2a, $\nu$2b), which are adjusted in each case during cogging between the toothed wheel provided for each predetermined axial distance (a) and the two pinions, satisfies defined acceptance criteria in the case of a plurality of predetermined axial distances (a).

4. Geared motor series according to claim 3, **characterised in that** the acceptance criteria include a backlash difference from the standard value close to zero.

5. Geared motor series according to one of claims 3 or 4, **characterised in that** the acceptance criteria include adherence to a desired transmission ratio.

6. Geared motor series according to one of claims 3 to 5, **characterised in that** the acceptance criteria include attainment of required strength values.

7. Geared motor series according to one of claims 3 to 6, **characterised in that** the addendum modification coefficients (x1a, x1b) of the two pinions are chosen in such a way that the respective difference between the backlash angles ($\nu$2a, v2b), which are adjusted in each case during cogging between the toothed wheel provided for each predetermined axial distance (a) and the two pinions, is minimal in the case of a plurality of predetermined axial distances (a).

**Revendications**

1. Gamme de motoréducteurs comprenant deux pignons ayant des nombres (z1a, z1b) de dents différents et plusieurs roues dentées ayant des nombres (z2a, z3a, z4a) de dents différents, les pignons et les roues dentées étant constitués de manière à pouvoir appareiller chaque pignon en plusieurs entraxes (a) déterminés à l'avance à l'une des roues dentées pour former un premier étage de transmission, **caractérisée en ce qu'**il est prévu par entraxe (a) défini à l'avance, une roue dentée unique constituée de manière à pouvoir, pour former un premier étage de transmission, s'appareiller au choix à le un pignon ou à l'autre pignon.

2. Gamme de motoréducteurs suivant la revendication 1, **caractérisée en ce que** les nombres (z1a, z1b) de dents des deux pignons diffèrent l'un de l'autre d'une dent.

3. Gamme de motoréducteurs suivant l'une des revendications précédentes, **caractérisée en ce que** les facteurs (x1a, x1b) de déport du profil des deux pignons sont choisis de manière à ce que la différence entre les angles ($\upsilon$2a, $\upsilon$2b) de jeu de rotation, qui s'établissent lors de l'engrenage entre la roue dentée prévue par entraxe (a) déterminé à l'avance et les deux pignons satisfassent des critères d'acceptation définis pour plusieurs entraxes (a) définis à l'avance.

4. Gamme de motoréducteurs suivant la revendication 3, **caractérisée en ce qu'**un écart de jeu de rotation à la valeur standard proche de zéro vaut comme critères d'acceptation.

5. Gamme de motoréducteurs suivant l'une des revendications 3 ou 4, **caractérisée en ce qu'**un maintien d'un rapport de démultiplication souhaité vaut comme critères d'acceptation.

6. Gamme de motoréducteurs suivant l'une des revendications 3 à 5, **caractérisée en ce qu'**obtenir des valeurs de résistance exigée vaut comme critères d'acceptation.

7. Gamme de motoréducteurs suivant l'une des revendications 3 à 6, **caractérisée en ce que** les facteurs (x1a, x1b) de déport de profil des deux pignons sont choisis de manière à ce que la différence entre les angles ($\upsilon$2a, $\upsilon$2b) de jeu de rotation, qui s'établissent lors de l'engrenage entre la roue dentée prévue par entraxe (a) déterminé à l'avance et les deux pignons soit minimum pour plusieurs entraxes (a) déterminés à l'avance.

# FIG 1

| Bestimmung z2 | | | | | | |
|---|---|---|---|---|---|---|
| | | | a | 70 | 80 | 90 |
| | m_n | x_1 | z_1 | z_2 | z_3 | z_4 |
| a | 2 | 0,4 | 16 | 44 | 52 | 61 |
| b | 2 | 0,4 | 17 | 43 | 51 | 60 |

| Bestimmung x2 | | | | | | |
|---|---|---|---|---|---|---|
| | | | a | 70 | 80 | 90 |
| | m_n | x_1 | z_1 | x_2 | x_3 | x_4 |
| a | 2 | 0,4 | 16 | -0,231 | 0,1777 | -0,038 |
| b | 2 | 0,4 | 17 | 0,3663 | 0,7748 | 0,5594 |

| Vorgabe/Bestimmung Asn | | | | | | |
|---|---|---|---|---|---|---|
| | | | a | 70 | 80 | 90 |
| | m_n | Asn1 | z_1 | Asn2 | Asn3 | Asn4 |
| a | 2 | -0,05 | 16 | -0,07 | -0,07 | -0,07 |
| b | 2 | -0,05 | 17 | -0,07 | -0,07 | -0,07 |

| Bestimmung Spielwinkel theta | | | | | | |
|---|---|---|---|---|---|---|
| | | | a | 70 | 80 | 90 |
| | m_n | x_1 | z_1 | theta2 [°] | theta3 | theta4 |
| a | 2 | 0,4 | 16 | 0,1563 | 0,1322 | 0,1127 |
| b | 2 | 0,4 | 17 | 0,1573 | 0,1329 | 0,1131 |

| Realisierte Übersetzung | | | | | | |
|---|---|---|---|---|---|---|
| | | | a | 70 | 80 | 90 |
| | m_n | x_1 | z_1 | i=z2/z1 | | |
| a | 2 | 0,6 | 16 | 2,75 | 3,25 | 3,81 |
| b | 2 | 0,0029 | 17 | 2,53 | 3,00 | 3,53 |

# FIG 2

| Bestimmung z2 | | | | | | |
|---|---|---|---|---|---|---|
| | | | a | 70 | 80 | 90 |
| | m_n | x_1 | z_1 | z_2 | z_3 | z_4 |
| a | 2 | 0,6 | 16 | 44 | 52 | 61 |
| b | 2 | 0,0029 | 17 | 44 | 52 | 61 |

| Bestimmung x2 | | | | | | |
|---|---|---|---|---|---|---|
| | | | a | 70 | 80 | 90 |
| | m_n | x_1 | z_1 | x_2 | x_3 | x_4 |
| a | 2 | 0,6 | 16 | -0,231 | 0,1777 | -0,038 |
| b | 2 | 0,0029 | 17 | -0,217 | 0,1618 | -0,036 |

| Vorgabe/Bestimmung Asn | | | | | | |
|---|---|---|---|---|---|---|
| | | | a | 70 | 80 | 90 |
| | m_n | Asn1 | z_1 | Asn2 | Asn3 | Asn4 |
| a | 2 | -0,05 | 16 | -0,07 | -0,07 | -0,07 |
| b | 2 | -0,05 | 17 | -0,05 | -0,093 | -0,068 |

| Bestimmung Spielwinkel theta | | | | | | |
|---|---|---|---|---|---|---|
| | | | a | 70 | 80 | 90 |
| | m_n | x_1 | z_1 | theta2 [°] | theta3 | theta4 |
| a | 2 | 0,6 | 16 | 0,1563 | 0,1322 | 0,1127 |
| b | 2 | 0,0029 | 17 | 0,1308 | 0,1577 | 0,1105 |

| Differenz abs (theta2a-theta2b) | | | | | |
|---|---|---|---|---|---|
| b | | MAX: 0,0255 | 0,0255 | 0,0255 | 0,0022 |

| Realisierte Übersetzung | | | | | | |
|---|---|---|---|---|---|---|
| | | | a | 70 | 80 | 90 |
| | m_n | x_1 | z_1 | i=z2/z1 | | |
| a | 2 | 0,6 | 16 | 2,75 | 3,25 | 3,81 |
| b | 2 | 0,0029 | 17 | 2,59 | 3,06 | 3,59 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1215417 A2
- EP 0452739 A

- DE 10312941 A1